# FASCICULE DE BREVET EUROPEEN

(11) **EP 0 884 219 B1**
(45) Date de publication et mention de la délivrance du brevet: **17.04.2002**
(21) Numéro de dépôt: 98401350.8
(22) Date de dépôt: 05.06.1998
(51) Int. Cl.: B60R 3/02

(54) **Dispositif de marchepied mobile pour un véhicule automobile**
Bewegbare Trittstufe für ein Fahrzeug
Movable foot step for a vehicle

(30) Priorité: 09.06.1997 FR 9707126
(43) Date de publication de la demande: 16.12.1998
(73) Titulaire: AUTOMOBILES PEUGEOT, 75116 Paris (FR); AUTOMOBILES CITROEN, 92200 Neuilly-sur-Seine (FR)
(72) Inventeur: Verdiere, François, 92150 Suresnes (FR)
(74) Mandataire: Berger, Helmut

(56) Documents cités:
- GB-A- 2 129 378
- US-A- 3 149 695
- US-A- 3 833 240
- PATENT ABSTRACTS OF JAPAN vol. 17, no. 256 (M-1413), 20 mai 1993 & JP 04 372434 A (HINO MOTORS), 25 décembre 1992
- PATENT ABSTRACTS OF JAPAN vol. 10, no. 222 (M-504) [2278], 2 août 1986 & JP 61 060339 A (NISSAN), 28 mars 1986

## Description

La présente invention concerne un dispositif de marchepied mobile permettant de faciliter l'accès à l'habitacle des passagers d'un véhicule automobile, comme révélé dans JP-A-61 060 339 conformément au préambule de la revendication 1.

Un tel dispositif s'applique en particulier à des véhicules du type monospace dont l'accès à l'habitacle est rendu difficile à cause de la hauteur relativement importante du plancher du véhicule.

On connaît par le document FR-A-2 651 739 un dispositif de marchepied mobile et escamotable selon lequel le marchepied est sélectivement mobile entre une position inactive rétractée et une position active sortie en fonction de la position fermée ou ouverte d'une porte coulissante du véhicule.

Selon ce document antérieur, le dispositif mécanique permettant de déplacer sélectivement le marchepied entre sa position rétractée et sa position sortie parallèlement au plan du plancher du véhicule est d'une structure extrêmement complexe, augmentant ainsi considérablement les coûts de fabrication de celui-ci.

La présente invention a pour but d'éliminer l'inconvénient du dispositif de marchepied ci-dessus connu.

A cet effet, l'invention propose un dispositif de marchepied mobile, selon des caractéristiques de la revendication 1. Le dispositif permet de faciliter l'accès à l'habitacle des passagers d'un véhicule automobile au travers d'une baie de porte comportant une porte mobile, et comprenant des moyens permettant de disposer sélectivement le marchepied dans une position inactive rétractée sous le plancher du véhicule et dans une position active sortie à laquelle le marchepied fait saillie latéralement en porte-à-faux relativement au plancher du véhicule et des moyens de transmission pouvant être actionnés par le mouvement de la porte pour commander les moyens de positionnement du marchepied à la position rétractée ou sortie de celui-ci suivant que la porte est fermée ou ouverte. Le marchepied est monté pivotant autour d'un axe longitudinal fixe relativement au plancher du véhicule et situé sous ce plancher de façon que le marchepied puisse pivoter par les moyens de transmission et de positionnement entre ses positions rétractée et sortie dans un espace situé entre le sol et le plancher.

De préférence, les moyens de positionnement comprennent un levier disposé latéralement au marchepied suivant un plan perpendiculaire à l'axe de pivotement de celui-ci en étant monté pivotant autour d'un axe longitudinal solidaire du marchepied à une distance éloignée de l'axe de pivotement du marchepied et du plancher du véhicule et un bras du levier situé à l'opposé de l'axe de pivotement du marchepied est relié aux moyens de transmission qui agissent sur ce bras du levier, lors du déplacement de la porte de sa position de fermeture à sa position d'ouverture, de manière à faire pivoter simultanément le levier et le marchepied autour de l'axe de pivotement de ce dernier de la position rétractée à la position sortie du marchepied à laquelle le levier a pivoté relativement au marchepied autour de son axe de pivotement dans un sens tel que un second bras du levier se trouve engagé avec un axe fixe de blocage du marchepied à sa position sortie, empêchant ainsi le pivotement du marchepied vers sa position rétractée lorsque le pied d'un utilisateur est en appui sur une partie correspondante du marchepied.

L'axe fixe de blocage du marchepied est situé à une distance déterminée du plan contenant les deux axes de pivotement du marchepied et du levier et à l'opposé de la partie du marchepied sur laquelle doit s'appuyer le pied d'un utilisateur lorsque le marchepied est à sa position sortie.

Le dispositif comprend de plus un ressort en spirale monté sur l'axe de pivotement du levier de façon à exercer sur le second bras du levier un couple de maintien de ce bras en appui contre l'axe de blocage du marchepied à sa position sortie.

Les moyens de transmission agissent sur le levier, lors du déplacement de la porte du véhicule de sa position d'ouverture à sa position de fermeture, de manière à faire pivoter le levier relativement au marchepied pour désengager le second bras du levier de l'axe fixe de blocage du marchepied et amener ce bras du levier en appui sur une partie saillante de l'axe de pivotement du marchepied de façon que le levier puisse exercer un couple de pivotement du marchepied à sa position rétractée.

Avantageusement, le second bras du levier comprend une partie d'extrémité arquée ayant à ses deux extrémités opposées respectivement deux encoches dont l'une s'engage sur l'axe fixe de blocage du marchepied en position sortie de celui-ci et l'autre s'engage sur la partie saillante de l'axe de pivotement du marchepied lors du pivotement de celui-ci à sa position rétractée.

Le marchepied comprend une butée faisant saillie latéralement de celui-ci et sur laquelle vient en appui le premier bras du levier lorsque les moyens de transmission commandent le pivotement du marchepied de sa position rétractée à sa position sortie.

De préférence, les moyens de transmission comprennent un câble dont une extrémité est reliée à l'extrémité du premier bras du levier et l'autre extrémité est reliée à un curseur à déplacement commandé par la porte du véhicule de façon à permettre au câble de faire pivoter, par l'intermédiaire du levier, le marchepied à sa position sortie ou rétractée suivant que le curseur est à une position correspondant à la positon d'ouverture ou de fermeture de la porte.

Le curseur est monté mobile longitudinalement au véhicule dans une rainure verticale longitudinale réalisée dans une paroi verticale d'un rail de guidage inférieur fixe de la porte coulissante du véhicule et est entraîné en translation rectiligne par un doigt transversal solidaire de l'axe de rotation d'un galet vertical d'un chariot de déplacement de la porte de façon que le doigt d'entraînement pousse le curseur et le câble pour le pivotement du levier et du marchepied à la position sortie de ce dernier et tire sur le curseur et le câble pour le pivotement du levier et du marchepied à la position rétractée de ce dernier.

Le dispositif comprend également un moyen permettant de rappeler constamment le curseur en appui sur le doigt d'entraînement pendant le déplacement du curseur dans sa rainure longitudinale.

De préférence, ce moyen de rappel est un ressort de traction fixé d'une part au curseur et d'autre part au rail de guidage à l'opposé de l'extrémité de la rainure longitudinale à laquelle le curseur occupe la position de sortie du marchepied.

La partie d'extrémité arquée du second bras du levier est plus éloignée latéralement du marchepied que la partie restante de ce bras de façon à permettre le libre pivotement du levier autour de l'axe de pivotement du marchepied lors du retour du marchepied à sa position rétractée.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 est une vue en perspective d'un véhicule automobile où le dispositif de marchepied de l'invention en position rétractée et escamotée lorsqu'une porte coulissante du véhicule est fermée.
La figure 2 représente le dispositif de marchepied du véhicule de la figure 1 en position active de sortie lorsque la porte coulissante du véhicule est ouverte.
La figure 3 est une vue de dessus du dispositif de marchepied de l'invention représentant le marchepied en position inactive rétractée sous le plancher du véhicule.
La figure 4 est une vue agrandie de côté suivant la flèche IV du dispositif de marchepied de l'invention.
La figure 5 est une vue partielle de côté suivant la flèche V de la figure 4.
La figure 6 est une vue de dessus semblable à celle de la figure 3 et représentant le marchepied en position active sortie.
La figure 7 est une vue de côté suivant la flèche VII du dispositif de marchepied de la figure 6.
La figure 8 est une vue de côté semblable à celle de la figure 7 et représentant le dispositif de marchepied de l'invention à une position du marchepied juste avant qu'il retourne vers sa position inactive rétractée.
La figure 9 est une vue semblable à celle de la figure 4 et représentant la position du dispositif de marchepied de l'invention lorsque le marchepied arrive à sa position rétractée.
La figure 10 est une vue en perspective agrandie du marchepied de l'invention.
La figure 11 est une vue en coupe agrandie suivant la ligne XI-XI du dispositif de la figure 3.

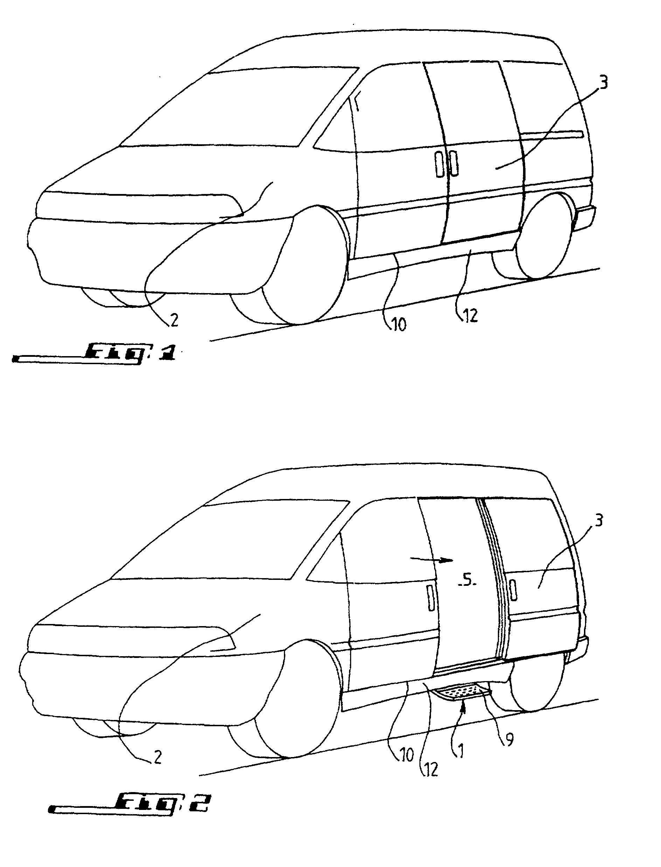

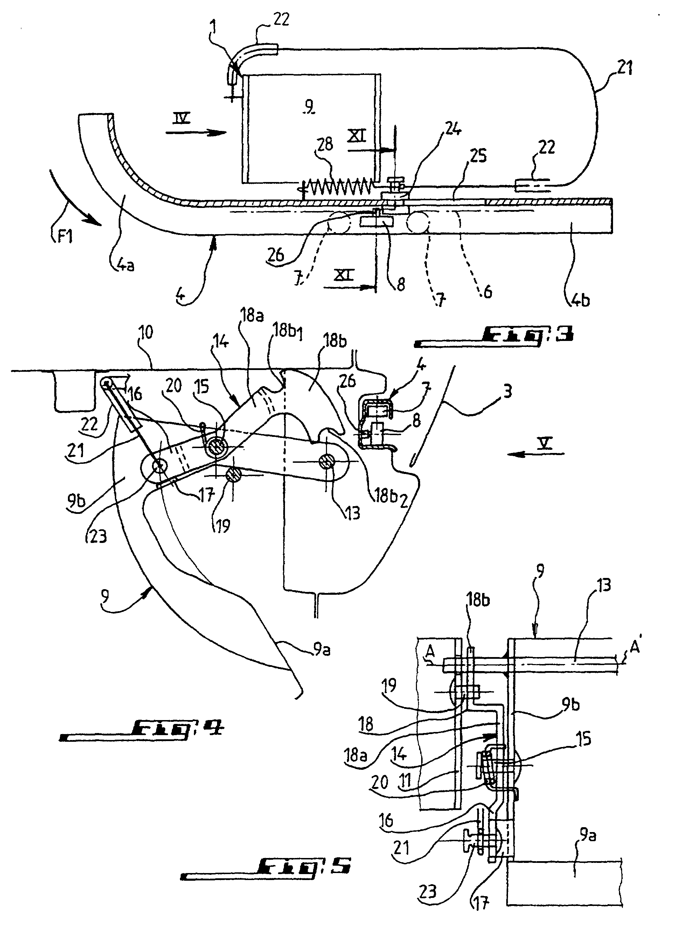

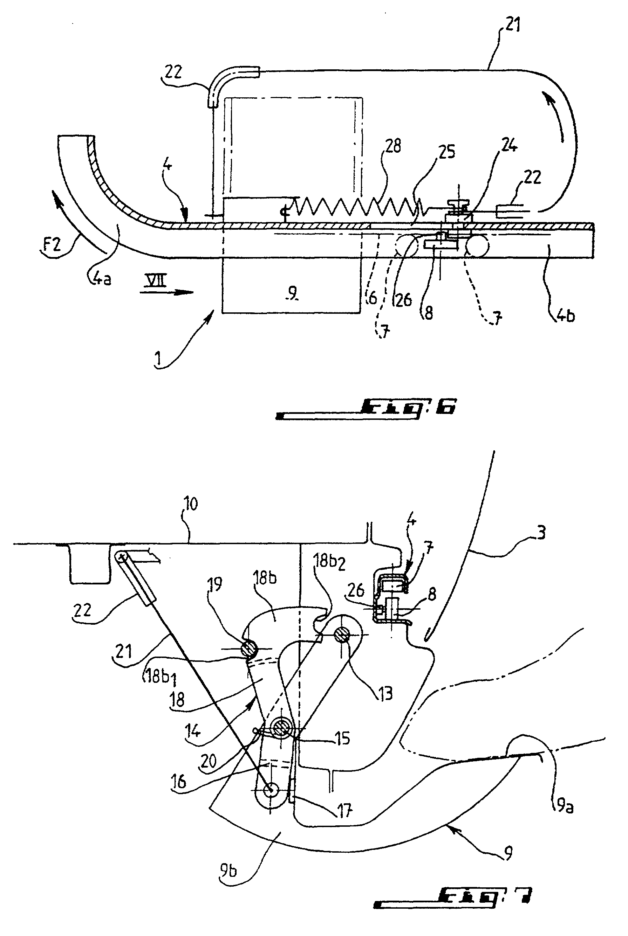

En se reportant aux figures, la référence 1 désigne un dispositif de marchepied mobile pour un véhicule automobile 2, par exemple du type monospace, dont chaque porte latérale arrière 3 est montée coulissante longitudinalement sur deux rails de guidage parallèles supérieur et inférieur, seul le rail de guidage inférieur 4 étant représenté notamment aux figures 3, 6 et 11. La porte coulissante 3 permet de fermer une baie de porte 5 d'accès à l'habitacle du véhicule. La porte 3 est guidée dans le rail inférieur 4 au moyen d'un chariot 6 partiellement représenté en traits mixtes aux figures 3, 6 et 11 et comprenant deux galets de guidage horizontaux 7 et un galet de guidage vertical 8 circulant dans le rail 4 comme cela ressort mieux de la figure 11 qui montre que le rail 4 présente en coupe la forme générale d'un U horizontal dont la paroi verticale de liaison des deux branches du U est tournée vers l'intérieur du véhicule. Vu de dessus, le rail 4 comporte une portion avant courbe 4a prolongée par une portion arrière droite 4b de manière qu'un déplacement du chariot 6 dans le rail de guidage 4 puisse plaquer la porte coulissante 3 contre la caisse du véhicule en position de fermeture de cette porte afin que celle-ci soit en affleurement avec la porte avant du véhicule ou dégager la porte arrière 3 de la caisse à une position écartée sensiblement parallèle à la porte avant et permettre ensuite le coulissement de la porte 3 vers sa position arrière d'ouverture.

Le dispositif de marchepied permet aux usagers d'accéder facilement à l'habitacle du véhicule et comprend un marchepied 9 disposé entre le sol et le plancher 10 du véhicule et des moyens permettant de disposer sélectivement le marchepied dans une position rétractée et escamotée sous le plancher 10 (figure 1) ou dans une position active sortie à laquelle le marchepied 9 fait saillie latéralement en porte-à-faux relativement au plancher 10 du véhicule (figure 2). Le dispositif de marchepied comprend également des moyens de transmission pouvant être actionnés par le mouvement coulissant de la porte 3 pour commander le moyen de positionnement du marchepied à une position correspondant à la position rétractée ou sortie du marchepied suivant que la porte 3 est respectivement fermée ou ouverte.

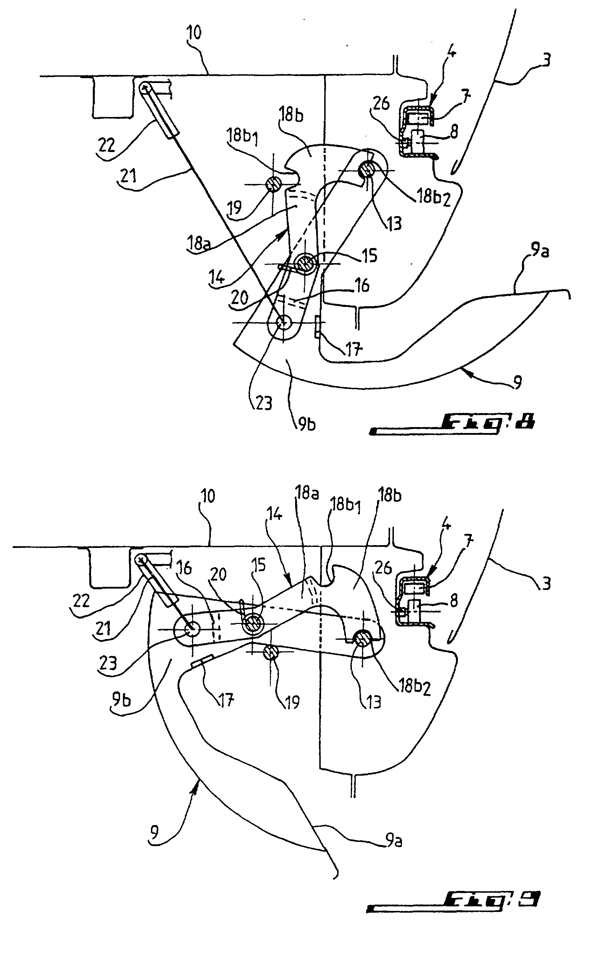

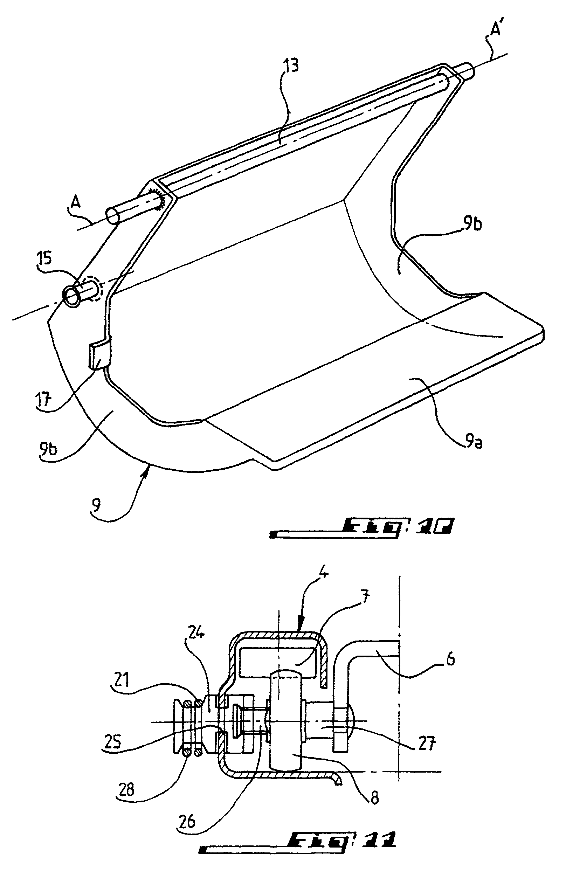

Selon l'invention, et comme cela ressort mieux des figures 4 - 10, le marchepied 9 est monté pivotant autour d'un axe longitudinal A-A' fixé à deux supports fixes transversaux 11 d'un longeron 12 du véhicule et situé sous le plancher 10 de façon que le marchepied 9 puisse pivoter par les moyens de transmission et de positionnement entre ses positions rétractée et sortie dans l'espace situé entre le sol et le plancher 10. Le marchepied présente la forme générale d'un auget comme représenté en figure 10 comportant une partie plane 9a destinée à faire saillie latéralement et sensiblement horizontalement en porte-à-faux relativement au plancher 10 du véhicule pour supporter le pied d'un utilisateur. Le marchepied en forme d'auget 9 est monté pivotant aux supports fixes 11 par une tige cylindrique 13 s'étendant coaxialement à l'axe A-A' et traversant les parties d'extrémité supérieures des deux parois latérales 9b du marchepied 9 en étant montée tourillonnante à chacune de ses extrémités dans le support fixe correspondant 11. La tige 13 est solidarisée à chacune des parois latérales 9b du marchepied 9 par soudage et chaque paroi latérale est perpendiculaire à l'axe de pivotement A-A'.

Les moyens de positionnement du marchepied 9 comprennent un levier 14 disposé latéralement au marchepied 9 suivant un plan perpendiculaire à l'axe de pivotement A-A' du marchepied 9 en étant monté pivotant autour d'un axe longitudinal 15 solidaire de la paroi latérale correspondante 9b du marchepied 9. L'axe de pivotement 15 du levier 14 est situé à une distance éloignée à la fois de l'axe cylindrique de pivotement 13 et du plancher 10 du véhicule.

Le levier 14 a son bras de levier 16, opposé à la tige cylindrique de pivotement 13, pouvant venir en appui sur une butée 17 solidaire de la paroi latérale 9b du marchepied 9 en faisant saillie perpendiculairement de celle-ci, de façon à entraîner en rotation le marchepied 9 autour de l'axe A-A' vers sa position sortie active comme on le verra ultérieurement. L'autre bras 18 du levier 14 comporte une partie droite 18a proche de la paroi latérale 9b du marchepied 9 et à laquelle se raccorde une partie droite d'extrémité 18b plus éloignée de la paroi latérale 9b que la partie 18a. Cette partie d'extrémité 18b du bras 18 est de forme arquée lorsque vue en plan et comporte à ses deux extrémités respectivement deux encoches curvilignes 18b1 et 18b2. L'encoche 18b1 est destinée à coopérer avec un axe 19 solidaire du support fixe 11 de manière à bloquer le marchepied 9 en position sortie pour empêcher celui-ci de pivoter vers sa position rétractée lorsque le pied d'un utilisateur est en appui sur la partie de support 9a du marchepied 9, tandis que l'autre encoche 18b2 est destinée à coopérer avec la partie d'extrémité saillante de la tige cylindrique 13 pour permettre le pivotement commandé du marchepied 9 vers sa position inactive rétractée, comme cela sera décrit de façon plus détaillée ultérieurement.

Un ressort en spirale 20 est monté sur l'axe de pivotement 15 du levier 14 de façon à faire pivoter le levier 14 relativement à la paroi latérale 9b du marchepied 9 vers l'axe de blocage 19 du marchepied 9 à sa position sortie.

Les moyens de transmission du dispositif de marchepied comprennent un câble 21 pouvant se déplacer dans une gaine fixe 22 partiellement représentée aux figures 3 et 6 et ayant l'une de ses extrémités reliée à l'extrémité du bras 16 du levier 14 par l'intermédiaire d'un axe 23 solidaire du bras 16 et son autre extrémité reliée à un curseur 24 à déplacement longitudinal commandé par la porte 3 du véhicule de façon à permettre au câble 21 de faire pivoter, par l'intermédiaire du levier 14, le marchepied 9 à sa position sortie ou rétractée suivant que le curseur 24 est à une position correspondant à la position d'ouverture ou de fermeture de la porte 3. Plus précisément, le curseur 24 est monté mobile dans une rainure verticale longitudinale 25 réalisée dans la paroi verticale de liaison des branches horizontales du rail de guidage inférieur 4 et est entraîné en translation rectiligne dans la rainure 25 par un doigt transversal 26 solidaire de l'axe de rotation 27 du galet vertical 8, l'axe 27 étant fixé à une partie correspondante du chariot 6 de déplacement de la porte 3 le long du rail de guidage 4. Pendant le déplacement du curseur 24 dans la rainure 25, celui-ci est rappelé constamment en appui contre le doigt d'entraînement 26 par un ressort de traction 28 fixé d'une part au curseur 24 et d'autre part à la face orientée vers l'intérieur du véhicule de la paroi verticale du rail de guidage inférieur 4 et à l'opposé de l'extrémité de la rainure 25 à laquelle le curseur 24 occupe une position correspondant à la position active de sortie du marchepied 9.

Le fonctionnement du dispositif de marchepied de l'invention ressort déjà en partie de la description qui en a été faite ci-dessus et va être maintenant expliqué.

Lorsque la porte coulissante 3 du véhicule est déplacée de sa position de fermeture à sa position d'ouverture dans le sens indiqué par la flèche F1 en figure 3, le doigt 26 du galet vertical 8 vient en appui sur la partie correspondante du curseur 24 logé dans le rail 4 de façon à déplacer le curseur le long de la rainure 25, à l'encontre de la force de rappel du ressort 28, de sa position représentée en figure 3 correspondant à la position inactive rétractée du marchepied 9, représentée en figure 4, à sa position représentée en figure 6 et correspondant à la position active du marchepied, représentée en figure 7. Ce déplacement du curseur 24 fait pousser le câble 21 dans sa gaine 22, lequel câble 21 agit sur l'extrémité du bras 16 du levier 14 en appui sur la butée 17 de manière à faire pivoter simultanément le levier 14 et le marchepied 9 autour de l'axe A-A' de la position rétractée de ce marchepied représentée en figure 4 à sa position sortie représentée en figure 7. En position active de sortie du marchepied 9, l'encoche 18b1 du bras de levier 18 est engagée autour de l'axe 19 et maintenue en appui sur celui-ci par la force de rappel exercée par le ressort 20. L'axe 19, à la position sortie du marchepied 9, est situé à une distance déterminée du plan contenant les deux axes 13 et 15 de pivotement du marchepied 9 et du levier 14 et à l'opposé de la partie 9a du marchepied 9 de façon que lorsque le pied d'un utilisateur est en appui sur cette partie 9a, le bras 18 en butée sur l'axe 9 bloque le marchepied à sa position sortie pour l'empêcher de pivoter vers sa position rétractée.

Lorsque la porte coulissante 3 est ramenée de sa position d'ouverture à sa position de fermeture dans le sens indiqué par la flèche F2 en figure 6, le ressort de traction 28, qui maintient le curseur en appui contre le doigt mobile d'entraînement 26 du galet vertical 8, exerce sur ce curseur une force de rappel vers la gauche par rapport à la figure 6 de façon à tirer le câble 21 dans un sens faisant pivoter le levier 14 relativement au marchepied 9 autour de l'axe 15 jusqu'à ce que l'encoche 18b2 du bras de levier 18 vienne en appui sur la partie saillante de la tige 13 comme représenté en figure 8, ce qui provoque ensuite le pivotement autour de l'axe A-A' de l'ensemble constitué par le levier 14 et le marchepied 9 jusqu'à la position rétractée du marchepied de la figure 9 et le ressort 20 fait pivoter le levier 14 relativement au marchepied 9 de façon à désengager l'encoche 18b2 de la tige 13 et amener l'extrémité du bras de levier 16 en appui sur la butée 17 de ce marchepied en position initiale de la figure 4. Le marchepied se retrouve alors en position escamotée sous le plancher 10. Il est à noter que lorsque le levier 14 et le marchepied 9 pivotent autour de l'axe A-A' vers la position rétractée à partir de leurs positions représentées en figure 8, les parties 18a et 18b du bras de levier 18 ainsi que la longueur de l'axe 19 en saillie dans l'espace entre le support fixe 11 et la paroi latérale correspondante 9b du marchepied 9, sont telles qu'elles autorisent le libre pivotement de cet ensemble vers la position rétractée du marchepied, c'est-à-dire sans que l'axe 19 gêne ce pivotement. De plus, le câble maintient en position rétractée de la figure 4 l'ensemble constitué par le levier 14 et le marchepied 9.

Le dispositif de marchepied de l'invention tel que décrit précédemment est d'une structure relativement simple et en tout cas diminue les coûts de fabrication par rapport aux dispositifs de marchepied connus jusqu'à maintenant. Bien entendu, diverses modifications peuvent être apportées à ce dispositif sans sortir du cadre de la présente invention. Ainsi, le ressort 28 de rappel du curseur 24 à sa position initiale peut être remplacé par un ensemble équilibreur, du type utilisé, par exemple, pour manoeuvrer des hayons de véhicules automobiles. Un tel ensemble équilibreur serait alors disposé en sens inverse du ressort 28 de façon à agir, de préférence, à la poussée sur le curseur.

## Revendications

1. Dispositif de marchepied mobile permettant de faciliter l'accès à l'habitacle des passagers d'un véhicule automobile au travers d'une baie de porte (5) comportant une porte mobile (3) et comprenant des moyens permettant de disposer sélectivement le marchepied (9) dans une position inactive rétractée sous le plancher (10) du véhicule et dans une position active sortie à laquelle le marchepied (9) fait saillie latéralement en porte-à-faux relativement au plancher (10) du véhicule et des moyens de transmission pouvant être actionnés par le mouvement de la porte (3) pour commander les moyens de positionnement du marchepied (9) à la position rétractée ou sortie de celui-ci suivant que la porte (3) est fermée ou ouverte, et le marchepied (9) étant monté pivotant autour d'un axe longitudinal fixe (A-A') relativement au plancher (10) du véhicule et situé sous ce plancher de façon que le marchepied (9) puisse pivoter par les moyens de transmission et de positionnement entre ses positions rétractée et sortie dans un espace situé entre le sol et le plancher (10), **caractérisé en ce que** les moyens de positionnement comprennent un levier (14) disposé latéralement au marchepied (9) suivant un plan perpendiculaire à l'axe de pivotement (A-A') de celui-ci en étant monté pivotant autour d'un axe longitudinal (15) solidaire du marchepied (9) à une distance éloignée de l'axe de pivotement (A-A') et du plancher (10) du véhicule et un bras (16) du levier (14) situé à l'opposé de l'axe de pivotement (A-A') du marchepied (9) est relié aux moyens de transmission qui agissent sur ce bras de levier (16), lors du déplacement de la porte (3) de sa position de fermeture à sa position d'ouverture, de manière à faire pivoter simultanément le levier (14) et le marchepied (9) autour de l'axe de pivotement (A-A') de ce dernier de la position rétractée à la position sortie du marchepied (9) à laquelle le levier (14) a pivoté relativement au marchepied (9) autour de son axe de pivotement (15) dans un sens tel que un second bras (18) du levier (14) se trouve engagé avec un axe fixe (19) de blocage du marchepied (9) à sa position sortie, empêchant ainsi le pivotement du marchepied (9) vers sa position rétractée lorsque le pied d'un utilisateur est en appui sur une partie correspondante (9a) du marchepied (9).

2. Dispositif selon la revendication 1, **caractérisé en ce que** l'axe fixe (19) de blocage du marchepied (9) est situé à une distance déterminée du plan contenant les deux axes de pivotement (A-A', 15) du marchepied (9) et du levier (14) et à l'opposé de la partie du marchepied (9a) sur laquelle doit s'appuyer le pied d'un utilisateur lorsque le marchepied est à sa position sortie.

3. Dispositif selon la revendication 1 ou 2, **caractérisé en ce qu'**il comprend un ressort en spirale (20) monté sur l'axe de pivotement (15) du levier (14) de façon à exercer sur le second bras (18) du levier (14) un couple de maintien de ce bras en appui contre l'axe (19) de blocage du marchepied (9) à sa position sortie.

4. Dispositif selon l'une des revendications 1 à 3, **caractérisé en ce que** les moyens de transmission agissent sur le levier (14), lors du déplacement de la porte (3) de sa position d'ouverture à sa position de fermeture, de manière à faire pivoter le levier (14) relativement au marchepied (9) pour désengager le second bras (18) du levier (14) de l'axe fixe (19) de blocage du marchepied (9) et amener ce bras de levier (18) en appui sur une partie saillante de l'axe de pivotement (13) du marchepied (9) de façon que le levier (14) puisser exercer un couple de pivotement du marchepied (9) à sa position rétractée.

5. Dispositif selon la revendication 4, **caractérisé en ce que** le second bras (18) du levier (14) comprend une partie d'extrémité arquée (18b) ayant à ses deux extrémités opposées respectivement deux encoches (18b1, 18b2) dont l'une (18b1) s'engage sur l'axe fixe (19) de blocage du marchepied (9) en position sortie de celui-ci et l'autre (18b2) s'engage sur la partie saillante de l'axe de pivotement (13) du marchepied (9) lors du pivotement de celui-ci à sa position rétractée.

6. Dispositif selon l'une des revendications 1 à 5, **caractérisé en ce que** le marchepied (9) comprend une butée (17) faisant saillie latéralement de celui-ci et sur laquelle vient en appui le premier bras (16) du levier (14) lorsque les moyens de transmission commandent le pivotement du marchepied (9) de sa position rétractée à sa position sortie.

7. Dispositif selon l'une des revendications 1 à 6, **caractérisé en ce que** les moyens de transmission comprennent un câble (21) dont une extrémité est reliée à l'extrémité du premier bras (16) du levier (14) et l'autre extrémité est reliée à un curseur (24) à déplacement commandé par la porte (3) du véhicule de façon à permettre au câble (21) de faire pivoter, par l'intermédiaire du levier (14), le marchepied (9) à sa position sortie ou rétractée suivant que le curseur (24) est à une position correspondant à la position d'ouverture ou de fermeture de la porte (3).

8. Dispositif selon la revendication 7, **caractérisé en ce que** le curseur (24) est monté mobile longitudinalement au véhicule dans une rainure verticale longitudinale (25) réalisée dans une paroi verticale d'un rail de guidage inférieur fixe (4) de la porte coulissante (3) du véhicule et est entraîné en translation rectiligne par un doigt transversal (26) solidaire de l'axe de rotation (24) d'un galet vertical (8) d'un chariot de déplacement (6) de la porte (3) de façon que le doigt d'entraînement (26) pousse le curseur (24) et le câble (21) pour le pivotement du levier (14) et du marchepied (9) à la position sortie et tire sur le curseur (24) et le câble (21) pour le pivotement du levier (3) et du marchepied (9) à la position rétractée.

9. Dispositif selon la revendication 8, **caractérisé en ce qu'**il comprend un moyen (28) permettant de rappeler constamment le curseur en appui sur le doigt d'entraînement (26) pendant le déplacement du curseur (24) dans sa rainure longitudinale (25).

10. Dispositif selon la revendication 9, **caractérisé en ce que** le moyen de rappel est un ressort de traction (28) fixé d'une part au curseur (24) et d'autre part au rail de guidage (4) à l'opposé de l'extrémité de la rainure longitudinale (25) à laquelle le curseur (24) occupe la position de sortie du marchepied (9).

11. Dispositif selon l'une des revendications 5 à 10, **caractérisé en ce que** la partie d'extrémité arquée (18b) du second bras (18) du levier (14) est plus éloignée latéralement du marchepied (9) que la partie restante (18a) de ce bras (18) de façon à permettre le libre pivotement du levier (14) autour de l'axe de pivotement du marchepied (9) lors du retour du marchepied (9) à sa position rétractée.

12. Dispositif selon l'une des revendications 7 à 11, **caractérisé en ce que** le câble (21) retient le levier (14) et le marchepied (9) à leurs positions inactives rétractées.

## Patentansprüche

1. Mobile Trittbrettvorrichtung, die es ermöglicht, den Zugang zum Fahrgast-Karosseriegehäuse eines Kraftfahrzeugs durch eine Türöffnung (5) zu erleichtern, umfassend eine mobile Tür (3) und umfassend Mittel, die es erlauben, das Trittbrett (9) selektiv in eine inaktive, unter den Boden (10) des Fahrzeugs eingefahrene Position und in eine aktive ausgefahrene Position anzuordnen, in der das Trittbrett (9) seitlich im Verhältnis zum Boden (10) des Fahrzeugs hervorspringend hervorsteht und Übertragungsmittel, die durch die Bewegung der Tür (10) betätigt werden können, um die Mittel zur Positionierung des Trittbretts (9) in der eingefahrenen oder ausgefahrenen Position zu steuern, je nachdem ob die Tür (9) geschlossen oder geöffnet ist, und wobei das Trittbrett (9) schwenkend um eine feste Längsachse (A-A') im Verhältnis zum Boden (10) des Fahrzeugs angebracht ist und sich derart unter diesem Boden befindet, dass das Trittbrett (9) durch die Übertragungsmittel und Mittel zur Positionierung zwischen seiner eingefahrenen und ausgefahrenen Position in einem Raum schwenken kann, der sich zwischen dem Erdboden und dem Boden (10) des Fahrzeugs befindet, **dadurch gekennzeichnet, dass** die Mittel zur Positionierung einen Hebel (14) umfassen, der seitlich zum Trittbrett (9) gemäß einer Ebene angeordnet ist, die senkrecht zur Schwenkachse (A-A') desselben ist und dabei schwenkend um eine Längsachse (15) angebracht ist, die mit dem Trittbrett (9) in einer entfernten Distanz zur Schwenkachse (A-A') und zum Boden (10) des Fahrzeugs fest verbunden ist und ein Arm (16) des Hebels (14), der sich gegenüber der Schwenkachse (A-A') des Trittbretts (9) befindet, mit den Übertragungsmitteln verbunden ist, die bei der Verschiebung der Tür (3) aus ihrer geschlossenen Position in ihre geöffnete Position auf diesen Hebelarm (16) derart einwirken, dass der Hebel (14) und das Trittbrett (9) gleichzeitig um die Schwenkachse (A-A') des letzteren von der eingefahrenen Position in die ausgefahrene Position des Trittbretts(9) geschwenkt werden, in der der Hebel (14) im Verhältnis zum Trittbrett (9) um seine Schwenkachse (15) in einer derartigen Richtung geschwenkt wird, dass ein zweiter Arm (18) des Hebels (14) mit einer festen Achse (19) zur Blockierung des Trittbretts (9) in seiner ausgefahrenen Position eingreift und somit das Schwenken des Trittbretts (9) in seine eingefahrene Position verhindert, wenn der Fuß eines Benutzers auf einen entsprechenden Teil (9a) des Trittbretts (9) einen Druck ausübt.

2. Vorrichtung gemäß Anspruch 1, **dadurch gekennzeichnet, dass** die feste Achse (19) zur Blockierung des Trittbretts (9) sich in einer bestimmten Entfernung zu der Ebene befindet, die die zwei Schwenkachsen (A-A', 15) des Trittbretts (9) und des Hebels (14) umfasst, und gegenüber des Teils des Trittbretts (9), auf dem der Fuß eines Benutzers sich aufstützen muss, wenn das Trittbrett in seiner ausgefahrenen Position ist.

3. Vorrichtung gemäß Anspruch 1 oder 2, **dadurch gekennzeichnet, dass** sie eine Spiralfeder (20) umfasst, die auf der Schwenkachse (15) des Hebels (14) derart angebracht ist, dass sie auf den zweiten Arm (18) des Hebels (14) ein Festhaltemoment dieses Arms unter Aufstützen gegen die Achse (19) zur Blockierung des Trittbretts (9) in seiner ausgefahrenen Position ausübt.

4. Vorrichtung gemäß Anspruch 1 bis 3, **dadurch gekennzeichnet, dass** die Übertragungsmittel beim Verschieben der Tür (3) aus ihrer geöffneten Position in ihre geschlossenen Position derart auf den Hebel (14) einwirken, dass der Hebel (14) im Verhältnis zum Trittbrett (9) geschwenkt wird, um den zweiten Arm (18) des Hebels (14) der festen Achse (19) zur Blockierung des Trittbretts (9) freizugeben und diesen Arm des Hebels (18) aufliegend auf einen hervorstehenden Teil der Schwenkachse (13) des Trittbretts (9) derart zu bringen, dass der Hebel (14) ein Schwenkmoment des Trittbretts (9) in seine eingefahrene Position ausüben kann.

5. Vorrichtung gemäß Anspruch 4, **dadurch gekennzeichnet, dass** der zweite Arm (18) des Hebels (14) einen gebogenen äußeren Teil (18b) umfasst, der an seinen zwei gegenüberliegenden Enden jeweils zwei Einkerbungen (18b1, 18b2) aufweist, von denen eine (18b1) auf der festen Achse (19) zur Blockierung des Trittbretts (9) in der ausgefahrenen Position desselben eingreift und die andere (18b2) in den hervorstehenden Teil der Schwenkachse (13) des Trittbretts (9) beim Schwenken desselben in seine eingefahrene Position eingreift.

6. Vorrichtung gemäß Anspruch 1 bis 5, **dadurch gekennzeichnet, dass** das Trittbrett (9) einen Anschlag (17) umfasst, der seitlich aus diesem hervorsteht und auf dem der erste Arm (16) des Hebels (14) aufliegt, wenn die Übertragungsmittel das Schwenken des Trittbretts (9) von seiner eingefahrenen Position in seine ausgefahrene Position steuern.

7. Vorrichtung gemäß Anspruch 1 bis 6, **dadurch gekennzeichnet, dass** die Übertragungsmittel ein Kabel (21) umfassen, dessen eines Ende mit dem Ende des ersten Arms (16) des Hebels (14) verbunden ist und das andere Ende mit einem Läufer (24) mit Verschiebung verbunden ist, der von der Tür (3) des Fahrzeugs derart gesteuert werden kann, dass es dem Kabel (21) ermöglicht wird, mittels des Hebels (14) das Trittbrett (9) aus seiner ausgefahrenen oder eingefahrenen Position schwenken zu lassen, je nachdem, ob sich der Läufer (24) sich in einer Position befindet, die der geöffneten oder der geschlossenen Position der Tür (3) entspricht.

8. Vorrichtung gemäß Anspruch 7, **dadurch gekennzeichnet, dass** der Läufer (24) mobil in Längsrichtung in einer vertikalen Längsrille (25) an dem Fahrzeug angebracht ist, die in einer vertikalen Wand einer unteren festen Führungsschiene (4) der Gleittür (3) des Fahrzeugs realisiert ist und in geradliniger Translation durch einen querverlaufenden Finger (26) angetrieben wird, der mit der Rotationsachse (24) einer vertikalen Walze (8) eines Verschiebungsschlittens (6) der Tür (3) derart fest verbunden ist, dass der Antriebsfinger (26) den Läufer (24) und das Kabel (21) zum Schwenken des Hebels (14) und des Trittbretts (9) in die ausgefahrene Position schiebt, und an dem Läufer (24) und dem Kabel (21) zum Schwenken des Hebels (3) und des Trittbretts (9) in die ausgefahrene Position zieht.

9. Vorrichtung gemäß Anspruch 8, **dadurch gekennzeichnet, dass** die ein Mittel (28) umfasst, das es ermöglicht, den Läufer während des Verschiebens des Läufers (24) in seiner länglichen Rille (25) ständig aufliegend auf dem Antriebsfinger (26) zurückzuholen.

10. Vorrichtung gemäß Anspruch 9, **dadurch gekennzeichnet, dass** das Rückholmittel eine Zugfeder (28) ist, die einerseits am Läufer (24) befestigt ist und andererseits an der Führungsschiene (4) gegenüber dem Ende der länglichen Rille (25) in der der Läufer (24) die ausgefahrene Position des Trittbretts (9) einnimmt.

11. Vorrichtung gemäß Anspruch 5 bis 10, **dadurch gekennzeichnet, dass** der gebogene Teil (18b) des zweiten Arms (18) des Hebels (14) seitlich weiter vom Trittbrett (9) entfernt ist als der übrige Teil (18a) des Arms (18), derart, dass das freie Schwenken des Arms (14) um die Schwenkachse des Trittbretts (9) bei der Rückkehr des Trittbretts (9) in seine eingefahrene Position ermöglicht wird.

12. Vorrichtung gemäß Anspruch 7 bis 11, **dadurch gekennzeichnet, dass** das Kabel (21) den Hebel (14) und das Trittbrett (9) in ihren inaktiven eingefahrenen Positionen festhält.

## Claims

1. Movable foot step device for facilitating access of passengers to the interior of a motor vehicle through a door opening (5) comprising a movable door (3) and including means for selectively arranging the foot step (9) in a retracted inoperative position under the floor (10) of the vehicle and in an extended operative position in which the foot step (9) is laterally overhangingly protruding relatively to the vehicle floor (10), and transmitting means able to be activated by movement of the door (3) in order to control the means for positioning the foot step (9) to the retracted or extended position thereof according to whether the door (3) is closed or open, and the foot step (9) being pivotally mounted about a longitudinal axis (A-A') fixed relatively to the vehicle floor (10) and located beneath this floor so that the foot step (9) may pivot thanks to the transmitting and positioning means between its retracted and extended positions in a space located between the ground and the floor (10), **characterized in that** the positioning means comprise a lever (14) arranged laterally to the foot step (9) according to a plane which is perpendicular to the pivot axis (A-A') thereof by being pivotally mounted about a longitudinal axis (15) rigidly connected to the foot step (9) at a distance from the pivot axis (A-A') and from the vehicle floor (10), and an arm (16) of the lever (14) located at the opposite of the pivot axis (A-A') of the foot step (9) is connected to the transmitting means which operate on this lever arm (16), upon a displacement of the door (3) from its closing position to its opening position, in order to make simultaneously the lever (14) and the foot step (9) to pivot about the pivot axis (A-A') thereof from the retracted position to the extended position of the foot step (9) at which the lever (14) has pivoted relatively to the foot step (9) about its pivot pin (15) in such a direction that a second arm (18) of the lever (14) is engaged with a fixed axis (19) which locks the foot step (9) in its extended position, thereby preventing the foot step (9) to pivot towards its retracted position when the foot of a user is bearing on a corresponding portion (9a) of the foot step (9).

2. Device according to claim 1, **characterized in that** the fixed axis (19) which locks the foot step (9) is located at a predetermined distance from the plane which contains the two pivot axes (A-A', 15) of the foot step (9) and lever (14) and at the opposite of the portion of the foot step (9a) on which must bear the foot of a user when the foot step is in its extended position.

3. Device according to claim 1 or 2, **characterized in that** it comprises a spiral spring (20) which is mounted on the pivot axis (15) of the lever (14) so as to exert, on the second arm (18) of the lever (14) a torque for maintaining this arm as bearing onto the axis (19) which locks the foot step (9) in its extended position.

4. Device according to one of claims 1 to 3, **characterized in that** the transmitting means operate on the lever (14), upon a displacement of the door (3) from its opening position to its closing position, so as to make the lever (14) to pivot relatively to the foot step (9) for disengaging the second arm (18) of the lever (14) from the fixed axis (19) which locks the foot step (9) and bringing this lever arm (18) as bearing onto a protuding portion of the pivot axis (13) of the foot step (9) so that the lever (14) may exert a torque for pivoting the foot step (9) to its retracted position.

5. Device according to claim 4, **characterized in that** the second arm (18) of the lever (14) comprises an arcuate end portion (18b) having its two opposed ends which are respectively provided with two notches (18b1, 18b2), one of which (18b1) is engaged onto the fixed axis (19) which locks the foot step (9) in the extended position thereof and the other (18b2) is engaged onto the protuding portion of the pivot axis (13) of the foot step (9) upon pivoting it to its retracted position.

6. Device according to one of claims 1 to 5, **characterized in that** the foot step (9) comprises an abutment (17) which protudes laterally therefrom and onto which the first arm (16) of the lever (14) comes to bear when the transmitting means control the foot step (9) to pivot from its retracted position to its extended position.

7. Device according to one of claims 1 to 6, **characterized in that** the transmitting means comprise a cable (21) having one end which is connected to the end of the first arm (16) of the lever (14) and an other end which is connected to a slider (24) with a displacement which is controlled by the vehicle door (3) in order to permit the cable (21) to make, by means of the lever (14), the foot step (9) to pivot to its extended or retracted position according to whether the slider (24) is in a position corresponding to the opening or closing position of the door (3).

8. Device according to claim 7, **characterized in that** the slider (24) is movable longitudinally to the vehicle in a longitudinal vertical groove (25) made in a vertical wall of a fixed lower guiding rail (4) of the sliding vehicle door (3) and is driven into a rectilinear translation by means of a transverse pin (26) which is rigidly connected to the rotation axis (24) of a vertical roller (8) of a displacement carriage (6) of the door (3) so that the driving pin (26) pushes the slider (24) and cable (21) for making the lever (14) and foot step (9) to pivot to the extended position and pulls the slider (24) and cable (21) for making the lever (3) and foot step (9) to pivot to its retracted position.

9. Device according to claim 8, **characterized in that** it comprises a means (28) for constantly returning the slider as bearing onto the driving pin (26) upon displacing the slider (24) in its longitudinal groove (25).

10. Device according to claim 9, **characterized in that** the returning means is a draw spring (28) fixed, on the one hand, to the slider (24) and, on the other hand, to the guiding rail (4) at the opposite of the end of the longitudinal groove (25) at which the slider (24) is in the extended position of the foot step (9).

11. Device according to one of claims 5 to 10, **characterized in that** the arcuate end portion (18b) of the second arm (18) of the lever (14) is more laterally distant from the foot step (9) than the remaining portion (18a) of this arm (18) in order to permit the lever (14) to freely pivot about the pivot axis of the foot step (9) upon returning the foot step (9) to its retracted position.

12. Device according to one of claims 7 to 11, **characterized in that** the cable (21) retains the lever (14) and foot step (9) in their retracted inactive positions.
